# EUROPEAN PATENT SPECIFICATION

(11) **EP 4 194 070 B1**
(45) Date of publication and mention of the grant of the patent: **04.06.2025**
(21) Application number: 22211505.7
(22) Date of filing: 05.12.2022
(51) Int. Cl.: B01D 15/36, G01N 30/95

(54) **IMPROVED SUPPRESSOR**
VERBESSERTER SUPPRESSOR
SUPPRESSEUR AMÉLIORÉ

(30) Priority: 09.12.2021 US 202117546187
(43) Date of publication of application: 14.06.2023
(73) Proprietor: Dionex Corporation, Sunnyvale, CA 94085 (US)
(72) Inventor: POHL, Christopher A., Sunnyvale, 94085 (US); RIVIELLO, John M., Sunnyvale, 94085 (US); YUAN, Tianyu, Sunnyvale, 94085 (US)
(74) Representative: Boult Wade Tennant LLP

(56) References cited:
- US-A1- 2014 134 050
- US-A1- 2016 187 305
- US-A1- 2018 065 089
- US-B2- 9 400 268

## Description

### BACKGROUND

Ion chromatography is widely used in the analysis of samples containing anions or cations. A typical process begins with introducing a sample in the solution of a conductive eluent, and then sequentially goes through a chromatographic column, separating sample ions in the eluent, suppressing the eluent to remove the electrolyte counter ions to the sample ions, and detecting the sample ions. The purpose of suppression is to reduce the background conductivity of the eluent and increase the conductivity of the analytes, thus increasing the response in the subsequent detection.

Various suppressors are known and can be used for suppressing the eluent. Examples include those disclosed in U.S. Pat. Nos. 4,999,098; 6,077,434; 6,328,885; 7,618,826; 10,175,211; and 10,571,439. In these suppressors, suppression is achieved by flowing the eluent through an eluent channel and a regenerant through a regenerant channel, where the eluent channel is separated from the regenerant channel by a charged membrane.

Assembly of suppressors can be challenging, especially the ion exchange material in the eluent channel. Resin can be used but the sealing surfaces are prone to be contaminated with resin particles, resulting in a poor seal and leakage of the suppressor. Screens may be used, but are prone to unraveling. The amount of ion exchange material must be sufficient to fully fill the eluent channel without putting too much pressure on the charged membrane on either side, but not so empty as to allow eluent to flow around instead of through it. This can be especially challenging as the ion exchange material will swell and shrink as solvent is introduced.

### BRIEF SUMMARY

An apparatus for suppressing an eluent of an aqueous sample stream including analyte ions of one charge, positive or negative, comprises a primary channel member, a first block, a first regenerant flow channel, a first charged barrier, a second block, a second regenerant flow channel, a second charged barrier, a first stationary flow-through ion exchange material, and optionally a first electrode and a second electrode. The primary channel member includes a primary channel extending through the primary channel member, the primary channel member having an inlet port and an outlet port, wherein the primary channel member is configured for the eluent to flow from the inlet port, through the primary channel, and then to the outlet port. The first block is disposed on a first side of the primary channel member and includes a first surface that faces the primary channel, wherein the first surface at least partly defines a first regenerant flow channel. The first regenerant flow channel includes a first inlet port and a first outlet port. The first charged barrier is configured to pass ions of only one charge, positive or negative, and of blocking bulk liquid flow. The first charged barrier is disposed between the primary channel member and the first block. The second block is disposed on a second side of the primary channel member and includes a second surface that faces the primary channel. The second surface at least partly defines a second regenerant flow channel. The second regenerant flow channel includes a second inlet port and a second outlet port. The second charged barrier is configured to pass ions of only one charge, positive or negative, and of blocking bulk liquid flow. The second charged barrier is disposed between the primary channel member and the second block. The first charged barrier and the second charged barrier have the same charge polarity. The first electrode and the second electrode are disposed in the first regenerant channel and the second regenerant channel, respectively.

The first stationary flow-through ion exchange material is disposed in the primary channel. The first stationary flow-through ion exchange material comprises a polyolefin substrate having a functional polymer layer disposed thereon. The polyolefin substrate has a pore structure with a pore size ranging from about 5 microns to about 250 microns. The functional polymer layer has a thickness ranging from about 1 micron to about 20 microns, and a layer pore structure having a pore size ranging from about 1 nm to about 100 nm. The functional polymer layer comprises an ion exchange layer.

These and other objects and advantages shall be made apparent from the accompanying drawings and the description thereof.

### BRIEF DESCRIPTION OF THE FIGURES

The accompanying drawings, which are incorporated in and constitute a part of this specification, illustrate embodiments, and together with the general description given above, and the detailed description of the embodiments given below, serve to explain the principles of the present disclosure.
FIG. 1 illustrates a system for performing ion chromatography which uses an exemplary suppressor.
FIG. 2 illustrates an exploded perspective view of an exemplary suppressor.

### DETAILED DESCRIPTION

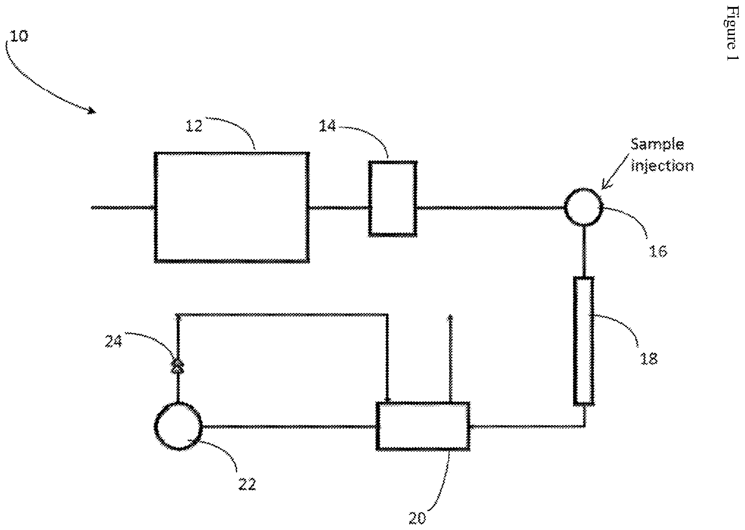

An ion chromatography (IC) system 10 for the analysis of anions or cations in ion chromatography, which is useful for determining a large number of ionic species so long as the species to be determined are solely anions or solely cations is depicted in FIG. 1. Herein, the term "ionic species" refers to species in ionic form and components of molecules having high ionic strength which are ionizable under the conditions of the present system. The eluent may also comprise of solvents such as methanol, acetonitrile, isopropanol and the like. The system 10 in general includes components for eluent generation, sample injection, ion-exchange separation, suppression or ionic detection. The system 10 may also include data acquisition or control devices.

As an example, FIG. 1 illustrates the eluent generation from deionized water drawn by a pump 12 and delivered to an eluent generator 14. The eluent generator 14 may be of any suitable type, including those manufactured by Thermo Scientific (Sunnyvale, Calif., USA) such as EGC, EG40 and EG50. The eluent generator 14 may be used in combination with other components, such as continuously regenerated trap columns (CR-TC) or high pressure degas assembly manufactured by Dionex. The generated eluent is electrically conductive. With the presence of a CR-TC column or degas assembly, the generated eluent flows through the CR-TC column and into the high pressure degas assembly. Alternatively, the eluent may be prepared manually and drawn from an eluent reservoir (not shown) using a high-pressure pump 12. In this case there is no need for an eluent generator 14.

A suitable sample is introduced, for example, through a sample injection valve 16, and flows in the solution of the eluent into chromatographic separation means, typically in the form of a chromatographic column 18 which is packed with a chromatographic separation medium. The separation medium may be in the form of ion-exchange resin, monolith or a porous hydrophobic chromatographic resin with essentially no permanently attached ion-exchange sites.

The solution leaving the column 18 is directed to suppression means typically in the form of a suppressor 20 arranged in series with the column 18. The suppressor 20 suppresses the conductivity of the electrolyte of the eluent from column 18 but not the conductivity of the separated ions. The conductivity of the separated ions is usually enhanced in the suppression process. For instance, an exemplary anion Cl⁻ can be enhanced by converting it to the acid form HCl. After passing through the suppressor 20, the eluent is neutralized to produce its weakly ionized form. For instance, the exemplary eluent OH⁻ can be neutralized by reacting it with hydronium ion to form water. Typically, the suppressor 20 includes a primary channel through which an ionic species flows and a regenerant channel through which a regenerant flows. One will appreciate that the device may be used for IC suppression as well as sample pre-treatment and other uses, and as such, the primary channel may direct an eluent with an ionic species flow, or alternatively, may simply direct a liquid including an ionic species. The suppressor 20 will be described in detail hereinafter.

The suppressed eluent is then directed to detection means typically in the form of a conductivity cell 22 for detecting the resolved ionic species. In conductivity cell 22, the presence of ionic species produces an electrical signal proportional to the amount of ionic material. Such signal is typically directed from the cell 22 to a conductivity meter, thus permitting detection of the concentration of separated ionic species. The conductivity cell 22 may be electrically connected to devices such as a computer or data acquisition system for acquiring and processing the data or controlling the system.

After passing through the conductivity cell 22, the eluent may be redirected to the regenerant channel on the suppressor 20, thus providing a source of water to the suppressor 20 and eliminating a need for an external supply of water similar to what is described in U.S. Pat. No. 5,352,360. The suppressed eluent may be directed to waste or other devices to provide water or remove components such as gases. To prevent the eluent in the conductivity cell 22 from out-gassing, the system 10 may include a back pressure coil or back pressure coils 24, through which the eluent flows before redirecting to the regenerant channel on the suppressor 20. The back pressure coil or coils 24 help to prevent gases, generated during suppression, from out-gassing and prevent formation of bubbles in the conductivity cell 22, thus reducing the noises and improving the accuracy of the detection.

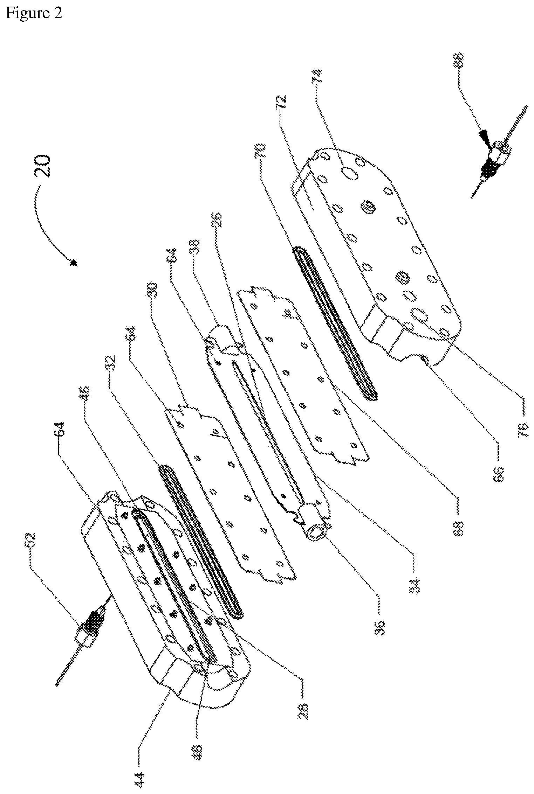

An exploded exemplary suppressor 20 including a primary or eluent channel 26, a first regenerant channel 28, a first charged barrier 30 and a first sealing member 32 is depicted in FIG. 2. Unlike conventional suppressors where eluent and regenerant channels are defined and sealed by gasketed screens, the eluent channel 26 is formed in a first eluent channel member 34 and the first regenerant channel 28 is formed on a first block 44 that is typically disposed on a side of the eluent channel member 34. The first charged barrier 30 is disposed between the eluent channel member 34 and the first block 44 and separates the eluent channel 26 from the first regenerant channel 28. The first sealing member 32 can be disposed against the first charged barrier 30 for sealing one of the eluent channel member 34 and the first regenerant channel 28. As illustrated in FIG. 2, the first sealing member 32 directly forms the seal to the first regenerant channel 28 and indirectly forms the seal to the eluent channel 26 by urging the first charged barrier 30 against the eluent channel member 34. The first sealing member 32 is disposed between the first charged barrier 30 and the first block 44. The first sealing member 32 partially defines the first regenerant channel 28 and provides a liquid-tight seal to the eluent channel 26 and the first regenerant channel 28. One will appreciate that in various embodiments, the suppressor may be configured with a sealing member utilized to form an eluent channel between the charged barrier and the eluent channel plate, and a regenerant channel defined by the compartment in the first block and enclosed with the other side of the first charged barrier. The function of the sealing member is to seal between the eluent channel member and the first block via the first charged barrier. In some embodiments, the eluent channel, does not have a filter configured to retain particles. This is not necessary as resin particles are not used in the eluent channel.

Referring still to FIG. 2, the eluent channel member 34, the first charged barrier 30, and the first block 44, each of them may include alignment features 64 in the form of a plurality of holes for facilitating alignment of these components. Holes in one component may be coaxial to holes in another component. One would appreciate that configurations of these holes, including sizes, shapes, locations, number of holes on each component and other configuration parameters can be readily varied. One would also appreciate that configuration of holes in one component is not necessary the same as that in another component.

The suppressor 20 further includes a second regenerant channel 66, a second charged barrier 68 and a second sealing member 70, which may be formed in a similar or substantially the same way as the first regenerant channel 28, the first charged barrier 30 and the first sealing member 32. For example, the second regenerant channel 66 may be formed on a second block 72 that is typically disposed on the other side of the eluent channel member 34 opposite to the first block 44. The second sealing member 70 can be disposed against the second charged barrier 68 for sealing one of the eluent channel member 34 and the second regenerant channel 66. As illustrated in FIG. 2, the second sealing member 70 directly forms the seal to the second regenerant channel 66 and indirectly forms the seal to the eluent channel 26 by urging the second charged barrier 68 against the eluent channel member 34. The second charged barrier 68 may be disposed between the eluent channel member 34 and the second block 72 and separates the eluent channel 26 from the second regenerant channel 66. Like the first sealing member 32, the second sealing member 70 is received in a groove constructed in the second block 72, partially defines the second regenerant channel 66 and provides liquid-tight seal to the eluent channel 26 and the second regenerant channel 66. The second regenerant channel 66 has a regenerant inlet 74 at one end, which may be in fluidic communication with a regenerant reservoir or back pressure coils, and a regenerant outlet 76 at the other end, which may be in fluid communication with waste, eluent generator or other devices. Fittings or other fluidic connectors may be used to assist the fluidic communication. It should be noted that the second charged barrier may have exchangeable ions of the same charge as the first charged barrier or in some applications will have opposite charge to the first charged barrier.

An apparatus for suppressing an eluent of an aqueous sample stream including analyte ions of one charge, positive or negative, comprises a primary channel member, a first block, a first regenerant flow channel, a first charged barrier, a second block, a second regenerant flow channel, a second charged barrier, a first stationary flow-through ion exchange material, and optionally a first electrode and a second electrode. The primary channel member includes a primary channel extending through the primary channel member, the primary channel member having an inlet port and an outlet port, wherein the primary channel member is configured for the eluent to flow from the inlet port, through the primary channel, and then to the outlet port. The first block is disposed on a first side of the primary channel member and includes a first surface that faces the primary channel, wherein the first surface at least partly defines a first regenerant flow channel. The first regenerant flow channel includes a first inlet port and a first outlet port. The first charged barrier is configured to pass ions of only one charge, positive or negative, and of blocking bulk liquid flow. The first charged barrier is disposed between the primary channel member and the first block. The second block is disposed on a second side of the primary channel member and includes a second surface that faces the primary channel. The second surface at least partly defines a second regenerant flow channel. The second regenerant flow channel includes a second inlet port and a second outlet port. The second charged barrier is configured to pass ions of only one charge, positive or negative, and of blocking bulk liquid flow. The second charged barrier is disposed between the primary channel member and the second block. The first charged barrier and the second charged barrier have the same charge polarity. The first electrode and the second electrode are disposed in the first regenerant channel and the second regenerant channel, respectively.

The first stationary flow-through ion exchange material is disposed in the primary channel. The first stationary flow-through ion exchange material comprises a polyolefin substrate having a functional polymer layer disposed thereon. The polyolefin substrate has a pore structure with a pore size ranging from about 5 microns to about 250 microns. The functional polymer layer has a thickness ranging from about 1 micron to about 20 microns, and a layer pore structure having a pore size ranging from about 1 nm to about 100 nm. The functional polymer layer comprises an ion exchange layer.

### STATIONARY FLOW-THROUGH ION EXCHANGE MATERIAL

A stationary flow-through ion exchange material comprises a polyolefin substrate having a functional polymer layer disposed thereon. In some embodiments, the polyolefin comprises saturated alkanes, such as polyethylene, polypropylene, polymethylpentene, polynorbornene, or combinations thereof. In some embodiments, the polyolefin substrate comprises non-aromatic hydrocarbons, such as polyethylene, polypropylene, polymethylpentene, polynorbornene, cyclic olefin copolymers, or combinations thereof. In some embodiments, the polyolefin substrate comprises polyethylene, polypropylene, or both. In some embodiments, the polyolefin substrate comprises polyethylene. The polyolefin substrate has a pore structure with a pore size ranging from 5 microns to 250 microns. The functional polymer layer has a thickness ranging from 1 micron to 20 microns and a layer pore structure having a pore size ranging from about 1 nm to 100 nm. In some embodiments, the polyolefin substrate is different than the functional polymer layer.

Pores can be classified by their connectedness. Pores that open externally are called open pores and are accessible for molecules, provided their relative size is correct, to fit inside them. Open pores may have a dead end or be open ended. A dead-end pore may be termed a blind pore. An open-ended pore connects to other openings so has communication through the material to other opening, this is typical of the pore structure in the polyolefin substrate. Layer pores are those that exist in the functional polymer layer and may be made up of open pores and open-ended pores.

The functional polymer layer is a layer disposed on the polyolefin substrate. It may be considered a coating. In some embodiments, the layer completely covers the polyolefin substrate. In some embodiments, the layer partially covers the polyolefin substrate.

In some embodiments, the coated substrate has a total pore volume that ranges from about 5% to about 70%. Examples of total pore volume ranges include 0% to 5%, 5% to 10%, 10% to 15%, 15% to 20%, 20% to 25%, 25%, to 30%, 30% to 35%, 35% to 40%, 45% to 50%, 50% to 55%, 55% to 60%, 60% to 65%, 65% to 70% or a range defined by the combination of two or more of the foregoing ranges. The total pore volume is the sum of the volume of the pores in the polyolefin substrate and the volume of the layer pores. The total pore volume is the percentage of the volume that are the pores compared to the overall volume of the coated substrate.

In some embodiments, the polyolefin substrate is a porous material comprising polyethylene, polypropylene, polymethylpentene, polynorbornene, cyclic olefin copolymers, or combinations thereof. In some embodiments, the polyolefin substrate comprises polyethylene (PE). In some embodiments, the polyolefin substrate comprises polypropylene (PP). In some embodiments, the polyolefin substrate comprises both PE and PP. In some embodiments, the polyolefin substrate is a saturated alkane. The polyolefin substrate has a pore structure with pore sizes ranging from 5 microns to 250 microns. Such as 5 microns to 25 microns, 25 microns to 50 microns, 50 microns to 75 microns, 75 microns to 100 microns, 100 microns to 125 microns, 125 microns to 150 microns, 150 microns to 175 microns, 175 microns to 200 microns, 200 microns to 225 microns, 225 microns to 250 microns, or a range defined by the combination of two or more of the foregoing ranges. It should be noted that a pore size can have an irregular shape, but that pore sizes are represented here as an approximation of an equivalent pore diameter if it were spherical in shape.

In some embodiments, the polyolefin substrates can be any porous solid structure providing sufficient solvent and eluent access and porosity. Example structures of the polyolefin substrate include, but are not limited to, fibers, sheets, screens, discs, rods, tubes, woven mesh, pressed or molded shapes, and sintered articles. In some embodiments, the polyolefin substrate comprises a form selected from fibers, sheets, screens, woven mesh, and sintered articles. The fibers can be fibers woven into fabrics or made into non-woven mats or thin paper-like sheets. In some embodiments, the polyolefin substrate comprises sintered particles. Sintered particles can be a porous mass formed by fusing particles together through heat or pressure without liquifying the particles. The polyolefin particles can be non-porous and irregularly shaped or spherically shaped. However, the fusing of the non-porous particles together forms a void volume that provides porosity to the resulting sintered particles. This void volume form liquid passageways through the porous mass.

In some embodiments, prior to coating, the polyolefin substrate had a surface area of from about 0.1 m²/g to about 1 m²/g. Examples of the surface area include, but are not limited to 0.1 m²/g to about 0.2 m²/g, 0.2 m²/g to about 0.3 m²/g, 0.3 m²/g to about 0.4 m²/g, 0.4 m²/g to about 0.5 m²/g, 0.5 m²/g to about 0.6 m²/g, 0.6 m²/g to about 0.7 m²/g, 0.7 m²/g to about 0.8 m²/g, 0.8 m²/g to about 0.9 m²/g, 0.9 m²/g to about 1 m²/g, or a range defined by the combination of two or more of the foregoing ranges.

The functional polymer is coated on the substrate as a thin layer. The mass ratio of the functional polymer layer to the polyolefin substrate ranges from 1/100 to about 50/100. For example, the mass ratio can be represented as the mass of monomer for the functional polymer incorporated into the polyolefin substrate divided by the mass of the polyolefin substrate (e.g., ratio = monomer mass for functional polymer / polyolefin substrate mass). The functional polymer is formed by polymerization of monomers to form the layer on the polyolefin substrate. In some embodiments, the ratio of monomer to substrate is 1/100 to 50/100, by mass prior to polymerization. Examples of the ratios range from 1/100 to 50/100, 10/100 to 50/100, 20/100 to 50/100, 30/100 to 50/100, 40/100 to 50/100, 1/100 to 40/100, 1/100 to 30/100, 1/100 to 20/100, 1/100 to 10/100, or a range defined by the combination of two or more of the foregoing ranges.

In some embodiments, the functional polymer layer is not covalently bound to the polyolefin. It is believed that the use of a porogenic solvent partially swells the polyolefin substrate to allow a physical mixing of the polyolefin structure and the functional polymer as it is formed.

The functional polymer layer thickness ranges from 1 micron to 20 microns, such as from 1 micron to 5 microns, 5 microns to 10 microns, 10 microns to 15 microns, 15 microns to 20 microns, or a range defined by the combination of two or more of the foregoing ranges. In some embodiments, the layer is homogenous.

The functional polymer has a layer pore structure having a pore size ranging from about 1 nm to 100 nm, such as 1 nm to 10 nm, 10 nm to 20 nm, 20 nm to 30 nm, 30 nm to 40 nm, 40 nm to 50 nm, 50 nm to 60 nm, 60 nm to 70 nm, 70 nm to 80 nm, 80 nm to 90 nm, 90 nm to 100 nm, or a range defined by the combination of two or more of the foregoing ranges. The layer pore structure refers to the pores within the functional polymer. The functional polymer is configured to bind chemicals and/or ions from a liquid solution. The layer pore structure is believed to be formed in part by the use of a porogenic solvent during the formation of the functional polymer layer.

Since the functional polymer contains many pores, it has a large surface area. In some embodiments, the surface area is from about 20 m²/g to about 800 m²/g, such as about 20 m²/g to about 30 m²/g, about 30 m²/g to about 40 m²/g, about 40 m²/g to about 50 m²/g, about 50 m²/g to about 60 m²/g, about 60 m²/g to about 70 m²/g, about 70 m²/g to about 80 m²/g, about 80 m²/g to about 90 m²/g, about 90 m²/g to about 100 m²/g, about 100 m²/g to about 150 m²/g, about 150 m²/g to about 200 m²/g, about 200 m²/g to about 300 m²/g, about 300 m²/g to about 400 m²/g, about 400 m²/g to about 500 m²/g, about 500 m²/g to about 600 m²/g, about 600 m²/g to about 700 m²/g, about 700 m²/g to about 800 m²/g, or a range defined by the combination of two or more of the foregoing ranges. In some embodiments, the functional polymer layer is not covalently bound to the polyolefin.

The functional polymer has ion exchange moieties and can additionally have hydrophobic, hydrophilic, and intermediate hydrophobicity/hydrophilicity moieties. These moieties provide different functionality for the functional polymer layer. In some embodiments, the layer is present on the surface of the polyolefin substrate and is a homogenous layer of the polyolefin.

The functional polymer layer provides the ion exchange properties. For example, the functional layer maybe styrene/divinyl benzene (DVB) which is then sulfonated, creating a cation exchange phase which is polar (hydrophilic/water wettable). A functional polymer layer of vinylbenzylchloride (VBC)/ divinylbenzene (DVB) can be aminated to produce an anion exchange phase. A DVB functional polymer layer can be grafted with a variety of vinyl monomers to produce polar and/or ion exchange phases.

The functional polymer is formed from a solution of monomers comprising porogenic solvents on the polyolefin substrate. The monomers can be hydrophobic and/or hydrophilic monomers and includes at least one crosslinking moiety. Examples of aromatic (styrenic) monomers include styrene, DVB, vinylbenzylchloride (VBC), ethylvinylbenzene (EVB) and derivatives thereof. Hydrophilic monomers include acrylates, methacrylates and derivatives thereof. In some embodiments, the functional polymer comprises a polymer formed from monomers selected from styrene, DVB, VBC, EVB, acrylates, methacrylates, derivatives thereof, and combinations thereof. In some embodiments, the functional polymer layer comprises a polymer formed from styrene, divinylbenzene, vinylbenzylchloride, acrylates, methacrylates, ethylvinylbenzene, derivatives thereof, and combinations thereof. In some embodiments, the functional polymer comprises a copolymer formed from the monomers DVB and EVB, It should be noted that in one embodiment technical grade DVB can contain 80% DVB (both meta and para isomers) along with about 20% EVB as an impurity. In some embodiments the functional polymer is crosslinked. Crosslinking monomers include any monomer with two or more groups capable of forming covalent bonds with a monomer, oligomer or polymer chain. In the case of VBC co-polymers, the VBC group of the copolymer can be reacted with an amine to form an attached amine group for providing an anion exchange phase.

### POROGENIC SOLVENTS

The polymer formed upon the polyolefin substrate is porous, which is generated by the use of a porogenic solvent. A porogenic solvent dissolves in the monomer mixture and partially solubilizes or swells the polyolefin substrate. It is not a solvent for the resulting polymer. The Hildebrand solubility parameter (delta, δ) can be used as an approximate guide for predicting the interaction of a porogen with the substrate. In general, the closer the δ value of the porogen and substrate, the more likely the porogen will solvate or swell the polyolefin substrate. Example Hildebrand solubility parameter for PE and PP are in the range of 16-17 MPa^{0.5}. In some embodiments, partially solubility means the different between the porogen δ and the polyolefin substrate δ is 4 or less, such as 3 or less, 2 or less, and 1 or less. Suitable porogenic solvents include, but are not limited to, aliphatics, such as hexane, heptane, octane and decane; cycloaliphatics, such as cyclopropane, methylcyclohexane and heptalene; aromatic hydrocarbons, such as toluene, xylene, ethylbenzene and diethylbenzene; halogenated aromatics; and halogenated aliphatics, such as dichloromethane, dichloroethane and trichloroethane. In some embodiments, the porogen is an aliphatic, such as hexane, heptane, octane, decane, and combinations thereof. The porogenic solvents can be used individually or in combination of two or more thereof. In some embodiments, the porogen to monomer ratio is 1/10 to 400/10 by mass, such as 1/10 to 10/10, 10/10 to 50/10, 50/10 to 100/10, 100/10 to 150/10, 150/10 to 200/10, 200/10 to 250/10, 250/10 to 300/10, 300/10 to 350/10, 350/10 to 400/10, or a range defined by the combination of two or more of the foregoing ranges. As an example, porogen to monomer ratio can be represented as a mathematical formula where the ratio = mass of porogen / mass of monomer. In some embodiments, the one or more porogen includes n-heptane and the one or more monomer includes divinylbenzene, and the porogen to monomer weight ratio ranges from 1/1 to 20/1.

In some embodiments, for non-polar monomers (such as aryl monomers like styrene, vinyl benzyl chloride, divinylbenzene), examples of porogens include hexane, heptane, octane, cyclohexanol, decanol, dodecanol, benzene, toluene, tetrahydrofuran, and halogenated porogens like chlorobenzene, trichloroethylene, trichloromethane. In some embodiments, for polar monomers (such as acrylates), examples of porogens include methanol, butanol, methyl-isobutyl ketone, dimethylformamide, and dimethylsulfone. In some instances, mixtures of porogens can be used to affect the surface area and pore size of the functional porous polymer layer.

### METHOD OF COATING THE SUBSTRATE

The coated substrate is formed by the process of providing a polyolefin substrate. The porogen, one or more monomer, and a polymerization initiator are combined with the polyolefin substrate. The monomer is polymerized to form the functional polymer layer on the polyolefin substrate. The monomer and polyolefin substrate mixture are agitated during at least part of the polymerization.

Examples of polymerization initiators include radical polymerization initiators such as benzoyl peroxide, dicumyl peroxide, 4,4 -Azobis(4- cyanovaleric acid), diisopropyl peroxydicarbonate, t-butyl peroxy-2-ethylhexanoate, t-butyl peroxypivalate, t-butyl peroxydiisobutyrate, lauroyl peroxide, dimethyl 2,2'-azobisisobutyrate (MAIB), azobisisobutyronitrile (AIBN) and azobiscyclohexanecarbonitrile (ABCN).

In one embodiment, polyolefin substrate is combined with a monomer solution containing one or more monomers, one or more porogens, and a polymerization initiator. In some embodiments, the porogen also acts as a swelling agent for the polyolefin substrate. The sealed vessel containing the polyethylene particles and monomer solution is placed on an agitation device and heated until polymerization is complete. Examples of agitation include, but are not limited to rotation, shaking, and tumbling.

After polymerization, the coated substrate can be cleaned chemically to remove any unreacted monomer, porogen, and reaction by-products. Cleaning can include the use of organic solvents, solutions of acids, bases and/or salts with stirring, agitation, ultrasonication and/or heating.

In some embodiments, a secondary chemistry step is performed on the polymer coated polyolefin. These include adding additional functional groups to impart, but not limited to, specific hydrophobic, hydrophilic and ion exchange functionalities. Multiple chemistry steps can be performed to impart the desired functionality.

The ability to coat permeable and impermeable porous polyolefin substrates with hydrophobic and hydrophilic porous polymers was unexpected based upon the "inertness" of polyolefins. The fact that the polymer uniformly coats the permeable substrate without filling or plugging the through pores of the impermeable substrate was also a surprising result where the coated substrate can allow liquid flow through at flow rates of up to 20 mL/min under low pressure or vacuum, such as 2 atmospheres, with the coated substrate in a thin disk format and be capable for adsorbing chemicals. Ion exchange coated substrates have capacities in the range of 0.1 to 3 milliequivalents/gram of the coated substrate. Non-polar (reversed-phase) coated substrates may have loading capacities in the range of 0.05 to 1 milliequivalents/gram of the coated substrate. As an example, hydrophobic material that can load on a non-polar coated substrate can be xylene. Thus, the coated substrates can be configured to be mounted in a laboratory pipette tip for changing or altering the chemical composition of the outputted solutions at relatively low pressures. This change in chemical composition can be caused by binding ions, analytes, and/or matrix chemical from the inputted liquid sample. In some instances, the inputted liquid sample can be acidic or basic, and then be partly or fully neutralized through ion exchange with hydronium or hydroxide ions so that the outputted liquid from the coated substrate has a changed or neutral pH. In an embodiment, the coating occludes about 5% to 75% of the void volume. The ability to coat these inert polyolefin substrates with polymers that allow for subsequent chemical reaction, opens the possibility of a very broad range of functional polymers to be applied for specific applications.

In some embodiments, there is a second stationary flow-through ion exchange material which is disposed in the first, second, or both regenerant channels. The second stationary flow-through ion exchange material comprises a second polyolefin substrate having a functional polymer layer disposed thereon. The second polyolefin substrate has a pore structure with a pore size ranging from about 50 microns to about 450 microns. The second functional polymer layer has a thickness ranging from about 1 micron to about 20 microns, and a layer pore structure having a pore size ranging from about 1 nm to about 100 nm. In some embodiments the second stationary flow-through ion exchange material is disposed in both the first and second regenerant channels.

In some embodiments, the first ion exchange layer comprises a first portion with strong ionizable groups and a second portion with weak ionizable groups. A mixed ion exchange material having strong ionizable ions and weak ionizable ions improves the current efficiency of the device. The following is a theoretical discussion of an anion analysis system including the weak ionizable group carboxylate form and the strong ionizable group sulfonate form. For anion analysis, a carboxylate form on the ion exchange material in the hydronium form is sufficiently resistive in the hydronium form to prevent easy transport of hydronium ions. The carboxylate form on the ion exchange material in hydronium form is a neutral form of the carboxylic acid molecule, and therefore is not electrically conductive and inhibits transport of hydronium ion across the ion exchange material in an electric field. In contrast to the hydronium form with the dissociated cation form such as the sodium form transport of the sodium ion is relatively facile in the carboxylate form resin.

Because the sulfonated form on the ion exchange material is strongly ionized, the transport of the ions in an electric field is independent of the form of the ion exchange material and both hydronium and the sodium form are transported freely. Since hydronium ion has a fivefold higher electrical mobility than sodium ion, a fully ionized ion exchange material is extremely conductive in the hydronium ion form. This leads to poor current efficiency, particularly in the sample stream channels of the prior art which are packed entirely with the sulfonated form of the ion exchange material. Similarly packing the sample stream flow channels with the carboxylate form of the ion exchange material alone will inhibit transport of the hydronium at the outlet. Although this effect may lead to improved current efficiency due to poor current carrying ability in the outlet zone of the sample stream flow channel, the analyte peaks generally are distorted in this zone. Further, since the carboxylate form of the ion exchange material is highly resistive the voltage requirements of the device to generate the required current for suppression become prohibitive. In other words, the device has high electrical resistance.

By mixing the weak ionizable groups (carboxylate) with the strong ionizable groups (e.g., sulfonated) both resistive and conductive regions are created within the sample stream flow channel. The resistive zones preserve the current efficiency of the device by slowing down the transport of hydronium ions. By slowing the hydronium ion, the overall transport of hydronium is inhibited which is believed to achieve current efficiency in the suppressor. Further, since there are conductive sections in the sample stream flow channel, analyte peaks after suppression are not distorted. Another benefit is the relatively low voltage required for the device operation during suppression since there is a conductive section in the outlet of the device.

Thus, the benefit of having strong ionizable groups (e.g., strong acid sulfonated) is the relatively high conductivity which allows for some transport of ions particularly when the voltage is far from optimal. Under these conditions there is minimal or no net distortion of the analyte zones and excellent peak shapes are achieved by the device.

As used herein, the terms "strong ionizable groups" and "weak ionizable groups" are defined to have the same meaning as ascribed to them by one of ordinary skill in the chromatography field. Typically, the strong ionizable groups for a cation exchanger are strong acids and for an anion exchanger are strong bases. Typically, the weak ionizable groups for a cation exchanger are weak acids and for an anion exchanger are weak bases. The first ion exchange portion typically comprises at least 40%, 50%, 60%, 65%, 70%, 75%, 80%, 85%, 90%, 95%, or 97% by weight of the mixture. The second ion exchange portion typically comprises at least 3% and less than 60%, 55%, 50%, 45%, 40%, 35%, 30%, 25%, 20%, 15%, 10%, or 5% by weight of the mixture. Suitable strong ionizable groups are known in the chromatography field. Dowex 50WX8 and Amberlite IR 122 are commonly used strong acid cation exchange resins. For use as a cation exchanger, they include ion exchange particles in the sulfonated, methylsulfonated, or sulfopropyl form, preferably in the sulfonated form. Chelex-100 and Bio-Rex 70, and Amberlite IRC-76 resins are commonly used weak acid cation exchange resins. For cation exchange, suitable weak ionizable groups are in the carboxylated, chlorocarboxylate, or phosphonate form, preferably in the carboxylated form.

For use as an anion exchanger, suitable strong and weak ionizable groups are also known. Strong ionizable groups include quarternary amines which could preferably be trialkyl amine based or dialkyl 2-hydroxy ethyl ammonium based. AG 1-X8 and AG 2-X8, respectively, are examples of these types of resins from Biorad laboratories. Weak ionizable groups are tertiary amine-based or secondary amine based groups. AG 3-X4 and AG 4-X4 are 4% crosslinked resin with a tertiary amine functional group from Biorad Laboratories. Diethylaminoethyl is an example of a weak base ionizable group.

In some embodiments, the first stationary flow-through ion exchange material comprises a screen. In some embodiments, the first stationary flow-through ion exchange material is a planar sheet configured to form a friction fit with a periphery of the primary channel. The flow-through ion exchange material is sized so that it forms a friction fit with the periphery of the primary channel.

In some embodiments, the first stationary flow-through ion exchange material is configured to swell less than 10% when exposed to the eluent, such as 0% to 1%, 1% to 2%, 2% to 3%, 3% to 4%, 4% to 5%, 5% to 6%, 6% to 7%, 7% to 8%, 8% to 9%, 9% to 10%. In some embodiments, the first stationary flow-through ion exchange material is configured to physically contact both the first charged barrier and the second charged barrier while the first stationary flow-through ion exchange material is exposed to the eluent, whereby the first stationary flow-through ion exchange material forms a bridge between the first charged barrier and the second charged barrier.

In some embodiments, the apparatus further comprises a sealing member. The sealing member may be made of any suitable material, such as an elastomer. The sealing member may be an O-ring or another form that can be fashioned to make a seal, such as a strip, ribbon, strap, line, band, or flat sheet of material. In some embodiments, a first sealing member is disposed within a first compartment of the first block and extending around a periphery of the first compartment, the first sealing member forms a seal with the first charged barrier in an assembled state of the suppressor and thereby defining a peripheral shape of a first regenerant channel between the first charged barrier and the first block, the first regenerant channel extending adjacent to the primary channel. The first sealing member biases the first charged barrier against the primary channel member in the assembled state of the suppressor thereby forming an indirect seal with a first surface of the primary channel member. In some embodiments a second sealing member is disposed within a second compartment of the second block and extending around a periphery of the second compartment. The second sealing member forms a seal with the second charged barrier in the assembled state of the suppressor and thereby defining a peripheral shape of a second regenerant channel between the second charged barrier and the second block, the second regenerant channel extending adjacent to the primary channel. The second sealing member biases the second charged barrier against the primary channel member in the assembled state of the suppressor thereby forming an indirect seal with a second surface of the primary channel member. The second surface of the primary channel member being opposite to the first surface of the primary channel member. In some embodiments, there is a first and second sealing member as described.

In the present disclosure the singular forms "a", "an" and "the" include the plural reference, and reference to a particular numerical value includes at least that particular value, unless the context clearly indicates otherwise. Thus, for example, a reference to "a material" is a reference to at least one of such materials and equivalents thereof known to those skilled in the art, and so forth.

The modifier "about" should be considered as disclosing the range defined by the absolute values of the two endpoints. For example, the expression "from about 2 to about 4" also discloses the range "from 2 to 4." When used to modify a single number, the term "about" may refer to plus or minus 10% of the indicated number and includes the indicated number. For example, "about 10%" may indicate a range of 9% to 11%, and "about 1 " means from 0.9 to 1.1.

When a list is presented, unless stated otherwise, it is to be understood that each individual element of that list and every combination of that list is to be interpreted as a separate embodiment. For example, a list of embodiments presented as "A, B, or C" is to be interpreted as including the embodiments, "A," "B," "C," "A or B," "A or C," "B or C," or "A, B, or C."

It is to be appreciated that certain features of the invention which are, for clarity, described herein in the context of separate embodiments, may also be provided in combination in a single embodiment. That is, unless obviously incompatible or excluded, each individual embodiment is deemed to be combinable with any other embodiment s) and such a combination is considered to be another embodiment. Conversely, various features of the invention that are, for brevity, described in the context of a single embodiment, may also be provided separately or in any sub-combination.

### EXAMPLES

### Example 1: Sintered PE with stvrene/divinvlbenzene and sulfate ion exchange sites

A solution of 96% styrene, 4% DVB (80% purity) and 1% AIBN (of the combined styrene and DVB mass) may be diluted with 2 parts n-heptane (w/w). The monomer/n-heptane solution may be then added to an equal mass of 0.2" diameter Porex 4901 sintered polyethylene discs, sealed in a glass bottle and placed in an oven at 65°C for 46 hours. After the discs are coated with the resulting styrene/DVB polymer, the discs will be rinsed in acetone and then dried.

Next, the coated substrate may be combined with concentrated sulfuric acid (10 parts of sulfuric acid to 1 part polymer coated substrate, w/w), and placed in a 95°C oven for one hour. Upon removal from the oven, the disc should be a light brown color indicating that the styrene/DVB polymer is sulfonated. The sulfonated discs will then be negatively charged and water wettable. The sulfonated discs can then be neutralized in sodium hydroxide and rinsed with deionized water.

This will result in a sulfonated styrene-divinylbenzene coated sintered polyethylene which can be used as a flow-through ion exchange material.

### Prophetic Example 2: polyethylene screen with VBC and quaternary amine ion exchange sites

A polyethylene screen substrate may be coated with vinylbenzylchloride (VBC) in a monomer/n-heptane solution of styrene, VBC, and AIBN. The screen is heated in an oven until the polymerization reaction is complete.

Next, the coated substrate is aminated in methanol with trimethylamine at elevated temperature. Excess amine is quenched with 3 M HCl and by washing with water to produce a quaternary amine ion exchange material.

## Claims

1. An apparatus (20) for suppressing an eluent of an aqueous sample stream including analyte ions of one charge, positive or negative, the apparatus comprising:
a primary channel member (34) including a primary channel (26) extending through the primary channel member (34), the primary channel member (34) having an inlet port and an outlet port, wherein the primary channel member (34) is configured for the eluent to flow from the inlet port, through the primary channel (26), and then to the outlet port;
a first block (44) disposed on a first side of the primary channel member (34) and including a first surface that faces the primary channel (26), wherein the first surface at least partly defines a first regenerant flow channel (28), the first regenerant flow channel (28) including a first inlet port and a first outlet port;
a first charged barrier (30) configured to pass ions of only one charge, positive or negative, and of blocking bulk liquid flow, the first charged barrier (30) disposed between the primary channel member (34) and the first block (44);
a second block (72) disposed on a second side of the primary channel member (34) and including a second surface that faces the primary channel (26), wherein the second surface at least partly defines a second regenerant flow channel (66), the second regenerant flow channel (66) including a second inlet (74) port and a second outlet (76) port;
a second charged barrier (68) configured to pass ions of only one charge, positive or negative, and of blocking bulk liquid flow, the second charged barrier (68) disposed between the primary channel member (34) and the second block (72), wherein the first charged barrier (30) and the second charged barrier (68) have the same charge polarity; and
a first electrode and a second electrode disposed in the first regenerant channel and the second regenerant channel, respectively; **characterised by**
a first stationary flow-through ion exchange material disposed in the primary channel (26); the first stationary flow-through ion exchange material comprising a polyolefin substrate having a functional polymer layer disposed thereon, preferably the polyolefin comprises polyethylene, preferably the functional polymer layer comprises a first portion with strong ionizable groups and a second portion with weak ionizable groups; preferably the first stationary flow-through ion exchange material comprises a screen;
wherein the polyolefin substrate has a pore structure with a pore size ranging from about 5 microns to about 250 microns;
the functional polymer layer having a thickness ranging from about 1 micron to about 20 microns, and a layer pore structure having a pore size ranging from about 1 nm to about 100 nm; and
the functional polymer layer comprises an ion exchange layer.

2. The apparatus (20) of claim 1, wherein a second stationary flow-through ion exchange material is disposed in the first, second, or both regenerant channels, preferably both regenerant channels;
wherein the second stationary flow-through ion exchange material comprises a second polyolefin substrate having a functional polymer layer disposed thereon;
wherein the second polyolefin substrate has a pore structure with a pore size ranging from about 50 microns to about 450 microns;
the second functional polymer layer having a thickness ranging from about 1 micron to about 20 microns, and a layer pore structure having a pore size ranging from about 1 nm to about 100 nm.

3. The apparatus (20) of claim 1, wherein the first stationary flow-through ion exchange material is a planar sheet configured to form a friction fit with a periphery of the primary channel (26).

4. The apparatus (20) of claim 1, wherein the first stationary flow-through ion exchange material is configured to swell less than 10% when exposed to the eluent.

5. The apparatus (20) of claim 1, wherein a dimension of the first stationary flow-through ion exchange material is configured to physically contact both the first charged barrier (30) and the second charged barrier (68) while the first stationary flow-through ion exchange material is exposed to the eluent, whereby the first stationary flow-through ion exchange material forms a bridge between the first charged barrier (30) and the second charged barrier (68).

6. The apparatus (20) of claim 1, wherein a mass ratio of the functional polymer layer to the polyolefin substrate ranges from about 1/100 to about 50/100.

7. The apparatus (20) of claim 1, wherein the first stationary flow-through ion exchange material has a pore volume of 5% to 70%.

8. The apparatus (20) of claim 1, wherein the functional polymer layer is not covalently bound to the polyolefin, and the functional polymer layer has a surface area of from about 20 m²/g to about 800 m²/g.

9. The apparatus (20) of claim 1, wherein the functional polymer layer comprises a polymer formed from styrene, divinylbenzene, vinylbenzylchloride, acrylates, methacrylates, ethylvinylbenzene, derivatives thereof, and combinations thereof.

10. The apparatus (20) of claim 1, wherein the functional polymer is crosslinked.

11. The apparatus (20) of claim 1, wherein the polyolefin substrate comprises a form selected from fibers, sheets, screens, woven mesh, and sintered particles, preferably sintered particles.

12. The apparatus (20) of claim 1, wherein the inlet port and the outlet port of the primary channel (26) both do not have a filter configured to retain particles.

13. The apparatus (20) of claim 1 further comprising:
a first sealing member (34) disposed within a first compartment of the first block (44) and extending around a periphery of the first compartment, the first sealing member (34) forming a seal with the first charged barrier (30) in an assembled state of the suppressor and thereby defining a peripheral shape of a first regenerant channel (28) between the first charged barrier (30) and the first block (44), the first regenerant channel (28) extending adjacent to the primary channel (26);
wherein the first sealing member (34) biases the first charged barrier (30) against the primary channel member (34) in the assembled state of the suppressor (20) thereby forming an indirect seal with a first surface of the primary channel member (34),
a second sealing member (70) disposed within a second compartment of the second block (72) and extending around a periphery of the second compartment, the second sealing member (70) forming a seal with the second charged barrier (68) in the assembled state of the suppressor (20) and thereby defining a peripheral shape of a second regenerant channel (66) between the second charged barrier (68) and the second block (72), the second regenerant channel (66) extending adjacent to the primary channel (26),
wherein the second sealing member (70) biases the second charged barrier (68) against the primary channel member (34) in the assembled state of the suppressor (20) thereby forming an indirect seal with a second surface of the primary channel member (34), the second surface of the primary channel member (34) being opposite to the first surface of the primary channel member (34).

14. The apparatus (20) of claim 1, wherein the ion exchange layer comprises sulfonate groups or sulfonated and carboxylate groups.

15. The apparatus (20) of claim 1, wherein the ion exchange layer comprises quaternary amine groups.

## Patentansprüche

1. Vorrichtung (20) zum Unterdrücken eines Eluenten eines wässrigen Probenstroms, der Analytionen einer (positiven oder negativen) Ladung enthält, wobei die Vorrichtung umfasst:
ein primäres Kanalelement (34), das einen primären Kanal (26) einschließt, der sich durch das primäre Kanalelement (34) erstreckt, wobei das primäre Kanalelement (34) eine Einlassöffnung und eine Auslassöffnung aufweist, wobei das primäre Kanalelement (34) so konfiguriert ist, dass der Eluent von der Einlassöffnung durch den primären Kanal (26) und dann zur Auslassöffnung fließt;
einen ersten Block (44), der auf einer ersten Seite des primären Kanalelements (34) angeordnet ist und eine erste Oberfläche einschließt, die dem primären Kanal (26) zugewandt ist, wobei die erste Oberfläche zumindest teilweise einen ersten Regeneriermittelströmungskanal (28) definiert, wobei der erste Regeneriermittelströmungskanal (28) eine erste Einlassöffnung und eine erste Auslassöffnung einschließt;
eine erste geladene Barriere (30), die so konfiguriert ist, dass sie Ionen mit nur einer Ladung (positiv oder negativ) durchlässt und den Flüssigkeitsstrom blockiert, wobei die erste geladene Barriere (30) zwischen dem primären Kanalelement (34) und dem ersten Block (44) angeordnet ist;
einen zweiten Block (72), der auf einer zweiten Seite des primären Kanalelements (34) angeordnet ist und eine zweite Oberfläche einschließt, die dem primären Kanal (26) zugewandt ist, wobei die zweite Oberfläche zumindest teilweise einen zweiten Regeneriermittelströmungskanal (66) definiert, wobei der zweite Regeneriermittelströmungskanal (66) eine zweite Einlassöffnung (74) und eine zweite Auslassöffnung (76) einschließt;
eine zweite geladene Barriere (68), die so konfiguriert ist, dass sie Ionen mit nur einer Ladung (positiv oder negativ) durchlässt und den Flüssigkeitsstrom blockiert, wobei die zweite geladene Barriere (68) zwischen dem primären Kanalelement (34) und dem zweiten Block (72) angeordnet ist, wobei die erste geladene Barriere (30) und die zweite geladene Barriere (68) die gleiche Ladungspolarität aufweisen; und
eine erste Elektrode und eine zweite Elektrode, die jeweils im ersten Regenerationskanal und im zweiten Regenerationskanal angeordnet sind; **gekennzeichnet durch:**
ein erstes stationäres Durchfluss-Ionenaustauschmaterial, das im primären Kanal (26) angeordnet ist; wobei das erste stationäre Durchfluss-Ionenaustauschmaterial ein Polyolefinsubstrat mit einer darauf angeordneten funktionelle Polymerschicht umfasst, wobei das Polyolefin vorzugsweise Polyethylen umfasst, wobei die funktionellen Polymerschicht vorzugsweise einen ersten Abschnitt mit stark ionisierbaren Gruppen und einen zweiten Abschnitt mit schwach ionisierbaren Gruppen umfasst; wobei das erste stationäre Durchfluss-Ionenaustauschmaterial vorzugsweise ein Sieb umfasst;
wobei das Polyolefinsubstrat eine Porenstruktur mit einer Porengröße im Bereich von etwa 5 Mikrometern bis etwa 250 Mikrometern aufweist;
wobei die funktionelle Polymerschicht eine Dicke im Bereich von etwa 1 Mikrometer bis etwa 20 Mikrometer und eine Schichtporenstruktur mit einer Porengröße im Bereich von etwa 1 nm bis etwa 100 nm aufweist; und
die funktionelle Polymerschicht eine Ionenaustauschschicht umfasst.

2. Vorrichtung (20) nach Anspruch 1, wobei ein zweites stationäres Durchfluss-Ionenaustauschmaterial im ersten, zweiten oder beiden Regenerationskanälen, vorzugsweise in beiden Regenerationskanälen, angeordnet ist;
wobei das zweite stationäre Durchfluss-Ionenaustauschmaterial ein zweites Polyolefinsubstrat mit einer darauf angeordneten funktionellen Polymerschicht umfasst;
wobei das zweite Polyolefinsubstrat eine Porenstruktur mit einer Porengröße im Bereich von etwa 50 Mikrometern bis etwa 450 Mikrometern aufweist;
die zweite funktionelle Polymerschicht eine Dicke im Bereich von etwa 1 Mikrometer bis etwa 20 Mikrometer aufweist und eine Schichtporenstruktur mit einer Porengröße im Bereich von etwa 1 nm bis etwa 100 nm aufweist.

3. Vorrichtung (20) nach Anspruch 1, wobei das erste stationäre Durchfluss-Ionenaustauschmaterial eine planare Platte ist, die so konfiguriert ist, dass sie mit einem Rand des primären Kanals (26) reibschlüssig ist.

4. Vorrichtung (20) nach Anspruch 1, wobei das erste stationäre Durchfluss-Ionenaustauschmaterial so konfiguriert ist, dass es bei Einwirkung des Eluenten um weniger als 10 % aufquillt.

5. Vorrichtung (20) nach Anspruch 1, wobei eine Abmessung des ersten stationären Durchfluss-Ionenaustauschmaterials so konfiguriert ist, dass es sowohl die erste geladene Barriere (30) als auch die zweite geladene Barriere (68) physisch berührt, während das erste stationäre Durchfluss-Ionenaustauschmaterial dem Eluenten ausgesetzt ist, wodurch das erste stationäre Durchfluss-Ionenaustauschmaterial eine Brücke zwischen der ersten geladenen Barriere (30) und der zweiten geladenen Barriere (68) bildet.

6. Vorrichtung (20) nach Anspruch 1, wobei ein Massenverhältnis der funktionellen Polymerschicht zum Polyolefinsubstrat im Bereich von etwa 1/100 bis etwa 50/100 liegt.

7. Vorrichtung (20) nach Anspruch 1, wobei das erste stationäre Durchfluss-Ionenaustauschmaterial ein Porenvolumen von 5 % bis 70 % aufweist.

8. Vorrichtung (20) nach Anspruch 1, wobei die funktionelle Polymerschicht nicht kovalent an das Polyolefin gebondet ist und die funktionelle Polymerschicht eine Oberfläche von etwa 20 m²/g bis etwa 800 m²/g aufweist.

9. Vorrichtung (20) nach Anspruch 1, wobei die funktionelle Polymerschicht ein Polymer umfasst, das aus Styrol, Divinylbenzol, Vinylbenzylchlorid, Acrylaten, Methacrylaten, Ethylvinylbenzol, Derivaten davon und Kombinationen davon gebildet ist.

10. Die Vorrichtung (20) nach Anspruch 1, wobei das Funktionspolymer vernetzt ist.

11. Vorrichtung (20) nach Anspruch 1, wobei das Polyolefinsubstrat eine Form umfasst, die aus Fasern, Platten, Sieben, Maschengewebe und Sinterpartikeln, vorzugsweise Sinterpartikeln, ausgewählt ist.

12. Vorrichtung (20) nach Anspruch 1, wobei weder die Einlassöffnung noch die Auslassöffnung des primären Kanals (26) über einen Filter verfügen, der zum Zurückhalten von Partikeln konfiguriert ist.

13. Vorrichtung (20) nach Anspruch 1, ferner umfassend:
ein erstes Dichtungselement (34), das in einem ersten Fach des ersten Blocks (44) angeordnet ist und sich um einen Umfang des ersten Fachs erstreckt, wobei das erste Dichtungselement (34) in zusammengebautem Zustand des Suppressors eine Dichtung mit der ersten geladenen Barriere (30) bildet und dadurch eine Umfangsform eines ersten Regenerationskanals (28) zwischen der ersten geladenen Barriere (30) und dem ersten Block (44) definiert, wobei sich der erste Regenerationskanal (28) neben dem primären Kanal (26) erstreckt;
wobei das erste Dichtungselement (34) die erste geladene Barriere (30) in zusammengebautem Zustand des Suppressors (20) gegen das primäre Kanalelement (34) vorspannt und dadurch eine indirekte Dichtung mit einer ersten Oberfläche des primären Kanalelements (34) bildet,
ein zweites Dichtungselement (70), das in einem zweiten Fach des zweiten Blocks (72) angeordnet ist und sich um einen Umfang des zweiten Fachs erstreckt, wobei das zweite Dichtungselement (70) in zusammengebautem Zustand des Suppressors (20) eine Dichtung mit der zweiten geladenen Barriere (68) bildet und dadurch eine Umfangsform eines zweiten Regenerationskanals (66) zwischen der zweiten geladenen Barriere (68) und dem zweiten Block (72) definiert, wobei sich der zweite Regenerationskanal (66) neben dem primären Kanal (26) erstreckt,
wobei das zweite Dichtungselement (70) die zweite geladene Barriere (68) in zusammengebautem Zustand des Suppressors (20) gegen das primäre Kanalelement (34) vorspannt und dadurch eine indirekte Dichtung mit einer zweiten Oberfläche des primären Kanalelements (34) bildet, wobei die zweite Oberfläche des primären Kanalelements (34) der ersten Oberfläche des primären Kanalelements (34) gegenüberliegt.

14. Vorrichtung (20) nach Anspruch 1, wobei die Ionenaustauschschicht Sulfonatgruppen oder sulfonierte und Carboxylatgruppen umfasst.

15. Vorrichtung (20) nach Anspruch 1, wobei die Ionenaustauschschicht quaternäre Amingruppen umfasst.

## Revendications

1. Appareil (20) permettant de supprimer un éluant d'un courant d'échantillon aqueux comportant des ions d'analyte d'une charge, positive ou négative, l'appareil comprenant :
un élément de canal primaire (34) comportant un canal primaire (26) s'étendant à travers l'élément de canal primaire (34), l'élément de canal primaire (34) ayant un orifice d'entrée et un orifice de sortie, dans lequel l'élément de canal primaire (34) est configuré pour que l'éluant s'écoule de l'orifice d'entrée, à travers le canal primaire (26), puis vers l'orifice de sortie ;
un premier bloc (44) disposé sur un premier côté de l'élément de canal primaire (34) et comportant une première surface qui fait face au canal primaire (26), dans lequel la première surface définit au moins partiellement un premier canal d'écoulement de régénérant (28), le premier canal d'écoulement de régénérant (28) comportant un premier orifice d'entrée et un premier orifice de sortie ;
une première barrière chargée (30) configurée pour laisser passer des ions d'une seule charge, positive ou négative, et pour bloquer un écoulement de liquide en masse, la première barrière chargée (30) étant disposée entre l'élément de canal primaire (34) et le premier bloc (44) ;
un second bloc (72) disposé sur un second côté de l'élément de canal primaire (34) et comportant une seconde surface qui fait face au canal primaire (26), dans lequel la seconde surface définit au moins partiellement un second canal d'écoulement de régénérant (66), le second canal d'écoulement de régénérant (66) comportant un second orifice d'entrée (74) et un second orifice de sortie (76) ;
une seconde barrière chargée (68) configurée pour laisser passer des ions d'une seule charge, positive ou négative, et pour bloquer un écoulement de liquide en masse, la seconde barrière chargée (68) étant disposée entre l'élément de canal primaire (34) et le second bloc (72), dans lequel la première barrière chargée (30) et la seconde barrière chargée (68) ont la même polarité de charge ; et
une première électrode et une seconde électrode disposées respectivement dans le premier canal de régénérant et le second canal de régénérant ; **caractérisé en ce que**
un premier matériau d'échange d'ions à écoulement continu stationnaire est disposé dans le canal primaire (26) ; le premier matériau d'échange d'ions à écoulement continu stationnaire comprenant un substrat de polyoléfine sur lequel est disposée une couche de polymère fonctionnel, de préférence la polyoléfine comprend du polyéthylène, de préférence la couche de polymère fonctionnel comprend une première partie avec des groupes fortement ionisables et une seconde partie avec des groupes faiblement ionisables ; de préférence, le premier matériau d'échange d'ions à écoulement continu stationnaire comprend un tamis ;
dans lequel le substrat de polyoléfine a une structure de pores ayant une taille de pore allant d'environ 5 microns à environ 250 microns ;
la couche de polymère fonctionnel ayant une épaisseur allant d'environ 1 micron à environ 20 microns, et une structure de pore de couche ayant une taille de pore allant d'environ 1 nm à environ 100 nm ; et
la couche de polymère fonctionnel comprend une couche d'échange d'ions.

2. Appareil (20) selon la revendication 1, dans lequel un second matériau d'échange d'ions à écoulement continu stationnaire est disposé dans le premier, le second, ou les deux canaux de régénérant, de préférence dans les deux canaux de régénérant ;
dans lequel le second matériau d'échange d'ions à écoulement continu stationnaire comprend un second substrat de polyoléfine sur lequel est disposée une couche de polymère fonctionnel ;
dans lequel le second substrat de polyoléfine a une structure de pore ayant une taille de pore allant d'environ 50 microns à environ 450 microns ;
la seconde couche de polymère fonctionnel ayant une épaisseur allant d'environ 1 micron à environ 20 microns, et une structure de pore de couche ayant une taille de pore allant d'environ 1 nm à environ 100 nm.

3. Appareil (20) selon la revendication 1, dans lequel le premier matériau d'échange d'ions à écoulement continu stationnaire est une feuille plane conçue pour former un ajustement serré avec une périphérie du canal primaire (26).

4. Appareil (20) selon la revendication 1, dans lequel le premier matériau d'échange d'ions à écoulement continu stationnaire est conçu pour gonfler de moins de 10 % lorsqu'il est exposé à l'éluant.

5. Appareil (20) selon la revendication 1, dans lequel une dimension du premier matériau d'échange d'ions à écoulement continu stationnaire est conçue pour entrer physiquement en contact à la fois avec la première barrière chargée (30) et la seconde barrière chargée (68) lorsque le premier matériau d'échange d'ions à écoulement continu stationnaire est exposé à l'éluant, moyennant quoi le premier matériau d'échange d'ions à écoulement continu stationnaire forme un pont entre la première barrière chargée (30) et la seconde barrière chargée (68).

6. Appareil (20) selon la revendication 1, dans lequel un rapport en masse de la couche de polymère fonctionnel au substrat de polyoléfine va d'environ 1/100 à environ 50/100.

7. Appareil (20) selon la revendication 1, dans lequel le premier matériau d'échange d'ions à écoulement continu stationnaire a un volume de pore de 5 % à 70 %.

8. Appareil (20) selon la revendication 1, dans lequel la couche de polymère fonctionnel n'est pas liée de manière covalente à la polyoléfine, et la couche de polymère fonctionnel a une surface active allant d'environ 20 m²/g à environ 800 m²/g.

9. Appareil (20) selon la revendication 1, dans lequel la couche de polymère fonctionnel comprend un polymère formé à partir de styrène, divinylbenzène, chlorure de vinylbenzyle, acrylates, méthacrylates, éthylvinylbenzène, dérivés de ceux-ci, et combinaisons de ceux-ci.

10. Appareil (20) selon la revendication 1, dans lequel le polymère fonctionnel est réticulé.

11. Appareil (20) selon la revendication 1, dans lequel le substrat de polyoléfine comprend une forme choisie parmi fibres, feuilles, tamis, mailles tissées, et particules frittées, de préférence particules frittées.

12. Appareil (20) selon la revendication 1, dans lequel ni l'orifice d'entrée, ni l'orifice de sortie du canal primaire (26) n'a de filtre conçu pour retenir des particules.

13. Appareil (20) selon la revendication 1, comprenant en outre :
un premier élément d'étanchéité (34) disposé à l'intérieur d'un premier compartiment du premier bloc (44) et s'étendant autour d'une périphérie du premier compartiment, le premier élément d'étanchéité (34) formant un joint avec la première barrière chargée (30) dans un état assemblé du suppresseur et définissant ainsi une forme périphérique d'un premier canal de régénérant (28) entre la première barrière chargée (30) et le premier bloc (44), le premier canal de régénérant (28) s'étendant de manière adjacente au canal primaire (26) ;
dans lequel le premier élément d'étanchéité (34) exerce une pression sur la première barrière chargée (30) contre l'élément de canal primaire (34) à l'état assemblé du suppresseur (20), formant ainsi un joint indirect avec une première surface de l'élément de canal primaire (34),
un second élément d'étanchéité (70) disposé dans un second compartiment du second bloc (72) et s'étendant autour d'une périphérie du second compartiment, le second élément d'étanchéité (70) formant un joint avec la seconde barrière chargée (68) à l'état assemblé du suppresseur (20) et définissant ainsi une forme périphérique d'un second canal de régénérant (66) entre la seconde barrière chargée (68) et le second bloc (72), le second canal de régénérant (66) s'étendant de manière adjacente au canal primaire (26),
dans lequel le second élément d'étanchéité (70) exerce une pression sur la seconde barrière chargée (68) contre l'élément de canal primaire (34) à l'état assemblé du suppresseur (20), formant ainsi un joint indirect avec une seconde surface de l'élément de canal primaire (34), la seconde surface de l'élément de canal primaire (34) étant opposée à la première surface de l'élément de canal primaire (34).

14. Appareil (20) selon la revendication 1, dans lequel la couche d'échange d'ions comprend des groupes sulfonate ou des groupes sulfonate et carboxylate.

15. Appareil (20) selon la revendication 1, dans lequel la couche d'échange d'ions comprend des groupes amine quaternaire.
